# EUROPEAN PATENT SPECIFICATION

(11) **EP 1 760 385 B1**
(45) Date of publication and mention of the grant of the patent: **06.05.2015**
(21) Application number: 05743305.4
(22) Date of filing: 27.05.2005
(51) Int. Cl.: B67D 1/08, B67D 7/02

(54) **CONNECTOR TO BE ATTACHED TO LIQUID TANK AND LIQUID TANK PROVIDED WITH THE CONNECTOR**
AN EINEM FLÜSSIGKEITSBEHÄLTER ZU BEFESTIGENDER VERBINDER UND MIT DEM VERBINDER VERSEHENER FLÜSSIGKEITSBEHÄLTER
CONNECTEUR A FIXER SUR UN RESERVOIR DE LIQUIDE ET RESERVOIR DE LIQUIDE POURVU DU CONNECTEUR

(30) Priority: 01.06.2004 JP 2004163395
(43) Date of publication of application: 07.03.2007
(73) Proprietor: Surpass Industry Co., Ltd., Gyoda-shi, Saitama 3610037 (JP)
(72) Inventor: ABE, Koichi, Gyoda-shi, Saitama 3610037 (JP)
(74) Representative: Klingseisen, Franz
(86) International application number: PCT/JP2005/009803
(87) International publication number: WO 2005/119115

(56) References cited:
- EP-A2- 0 927 849
- JP-A- 2002 031 288
- JP-A- 2002 114 242
- JP-A- 2003 502 588
- JP-U- 64 021 890
- US-A1- 2002 005 641
- US-A1- 2002 020 450
- US-A1- 2002 040 740

## Description

### Technical Field:

The present invention relates to a connector and a liquid tank provided with the connector to be attached to the tank, wherein: stored in the tank is a liquid such as semiconductor high-purity chemicals and ordinary chemicals; and, the connector is constructed of both a plug and a socket each used for delivery of the liquid. Background Art:

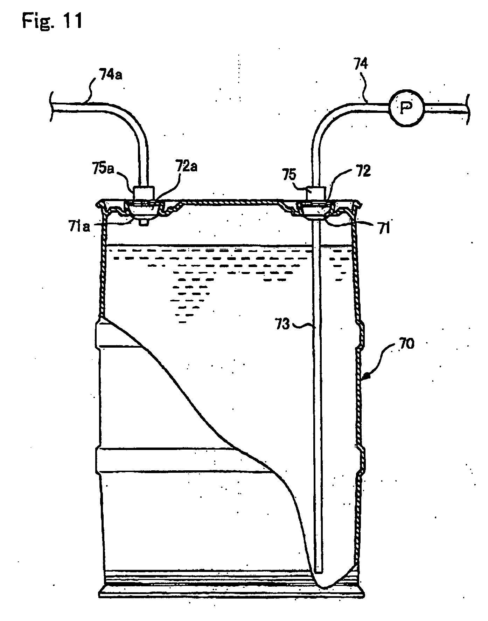

In general, semiconductor high-purity chemicals and ordinary chemicals are stored in a tank good in resistance to these chemicals. As shown in Fig. 11, hitherto it has been known in the art that: formed in this tank 70 are two pieces of mouth stopper portions 71 and 71a; and, plugs 72 and 72a are mounted on these mouth stopper portions 71 and 71a, respectively, wherein each of the plugs 72 and 72a is provided with a plug portion not shown in the drawings. These plugs 72 and 72a function as lids for closing the mouth stopper portions 71 and 71a, respectively. Of these plugs 72 and 72a: one serves as a liquid passage connecting piece 72; and, the other serves as a gas passage connecting piece 72a. Connected with the liquid passage connecting piece 72 is a siphon tube 73 which reaches in the vicinity of a bottom portion of the tank 70.

Further, in this kind of tank 70, a cap is mounted on a plug portion of each of the plugs 72 and 72a, which are mounted on the mouth stopper portions 71 and 71a of the tank, respectively, so that a through hole formed in each of the plug portions is closed by means of this cap. Under such circumstances, the tank is carried or reserved.

In retrieving the liquid stored in this tank 70, first of all, the caps having been mounted on the plug portions of the plugs 72, 72a provided in the mouth stopper portions 71, 71a in the tank 70 are removed. After that, each of sockets 75, 75a having been connected with a hose 74 is connected with each of the plug portions of these plugs 72, so that the liquid contained in the tank 70 is retrieved and supplied to the hose 74 through the siphon tube 73 by using a pump P. At this time,' in order to prevent the interior of the tank 70 from falling in negative in pressure, an inert gas is supplied to the tank 70 from a hose 74a having been connected with the plug portion of the other plug 72a.

In some instance, the liquid stored in the tank 70 vaporizes with the lapse of time. Consequently, there is a fear that the pressure inside the tank 70 increases in use. Due to this, a tank and a plug, which is used in the tank, each improved in safety and free from a fear that the liquid flows out of the tank under the influence of the pressure inside the tank 70 in use, have been proposed (Japanese Patent application Laid-Open No.: 2002-114242 gazette).

Further, in Japanese Patent application Laid-Open No. : 2002-54782 gazette, there is disclosed a tube joint which is capable of: reducing the amount of air mixing into the liquid when the socket is connected with the plug as small as possible; and, preventing the liquid from leaking from the socket and the plug when the socket is separated from the plug.

Incidentally, in order to prevent the sludge having been precipitated out of a liquid chemical in the tank from increasing in volume, in recent years, the need to circulate the liquid chemical at a time when the liquid chemical stored in the tank is not delivered exists in the art. In this circulation of the liquid chemical, the liquid chemical having been retrieved from the tank through the siphon tube is returned to the interior of the tank. In a conventional tank, its gas plug which is small in its inner diameter suffices only for pressure feed of the gas. However, such gas plug is too small in diameter when used also in circulation of the liquid chemical, and therefore can't be used to realize a smooth circulation of the liquid chemical.
Patent document 1: Japanese Patent application Laid-Open No.: 2002-114242 gazette; and
Patent document 2: Japanese Patent application Laid-Open No.: 2002-54782 gazette.

### DISCLOSURE OF THE INVENTION

### PROBLEMS TO BE SOLVED BY THE INVENTION

In any one of the tank and the plug described in the above, two openings each for each of the liquid delivery use and the gas feed use are independently formed, wherein: in these openings, there are individually installed both a liquid delivery plug and a gas feed plug. Due to this, such installation of the individual plugs takes too much labor and cost. Further, the conventional tank described in the above has the disadvantage that the liquid stored in the tank can't be circulated.

Consequently, it is an object of the present invention to provide both a connector to be attached to a liquid tank and the liquid tank itself, wherein: according to the present invention, two kinds of plugs described above are integrated in a compact manner to reduce in labor in installation of these plugs; further, it is possible to prevent the plugs from be improperly connected, and also possible to be advantageous in cost in realizing such prevention of improper connection; further, it is also possible to realize the circulation of the liquid stored in the tank; and, still further, the connector to be attached to the liquid tank is capable of performing a dust protective function.

### MEANS FOR SOLVING THE PROBLEMS

A connector of the present invention for solving the problems described above is one to be attached to a mouth stopper portion of a liquid tank for delivery of an internal liquid stored in the interior of the liquid tank, wherein: the connector is constructed of a plug fixedly mounted on the tank and a socket connected with the plug; the plug is provided with a cup shaped body having a fitting means for fixing to the tank and a plug tube which has engagement means engaged with the socket and is vertically provided in a central area of a concave portion of the cup shaped body such that there is a gap between the plug tube and the cup shaped body; with a liquid passage and a gas passage formed in the cup shaped body to vertically pass through the plug tube; and, the socket is provided with a liquid passage communicated with the liquid passage and also provided with a liquid passage connecting piece communicated with the liquid passage, and further provided with a gas passage communicated with the gas passage and also provided with a gas passage connecting piece communicated with the gas passage, wherein said plug is provided with a siphon tube being a unified portion of the cup shaped body, integrally formed from the bottom of the cup shaped body to communicate with the liquid passage and wherein the socket is provided with an engagement means engaged with the plug tube and also provided with a valve unit together with a liquid passage and a liquid passage connecting piece communicated with the liquid passage, and further provided with a gas passage and a gas passage connecting piece communicated with the gas passage.

Preferably the valve unit is constructed of: a sleeve element provided with a valve seat in its lower portion; a valve disposed inside the sleeve element; and, a spring for urging the valve seat, wherein: the gas passage is so formedas to vertically extend along an outer side of the sleeve element and also to be communicated with the gas passage connecting piece; and, when the valve is opened, the liquid passage disposed in the side of the plug is permitted to communicate with the liquid passage disposed in the side of the socket, wherein the gas passage disposed in the side of the socket is permitted to communicate with the gas passage disposed in the side of the plug.

preferably: the plug is provided with a plug cap which covers the plug portion at a time when the socket is not connected; a color ring is fitted in an opening in an upper surface of the plug, wherein the color ring is classified in color in accordance with the kinds of the liquid in the tank; a key is formed in the opening in the upper surface of the plug, wherein the key has its installation position varied in accordance with the kind of the liquid stored in the tank; and, an upper end of the gas passage having been formed in the plug portion is opened into an upper side surface of the plug portion.

Further, the socket is constructed of: a sleeve; an inner tube, which is slidably inserted in the sleeve and has its inner peripheral surface formed into the gas passage; a valve unit installed inside the inner tube; the liquid passage connecting piece for supporting an upper surface of the valve unit; and, the gas passage connecting piece mounted on an upper portion of the inner tube. Further, preferably one or a plurality of gas passages are formed in an outer side of the sleeve element, wherein an upper end of each of the gas passages is opened into an annular gap formed between the inner tube and the liquid passage connecting piece.

The plug is provided with a male screw portion in its intermediate portion, wherein: the male screw portion is threadably engaged with a mouth stopper portion of an upper surface of the tank; and, a bulging portion which bulges out over an edge portion of the mouth stopper portion is provided in an upper portion of the plug; and, the bulging portion is covered with a dust protective cap.

The liquid tank of the present invention for solving the problems described above is provided with two pieces of mouth stopper portions in its upper surface, wherein: provided in at least one of the mouth stopper portions is any one of the connectors described above.

### EFFECT OF THE INVENTION

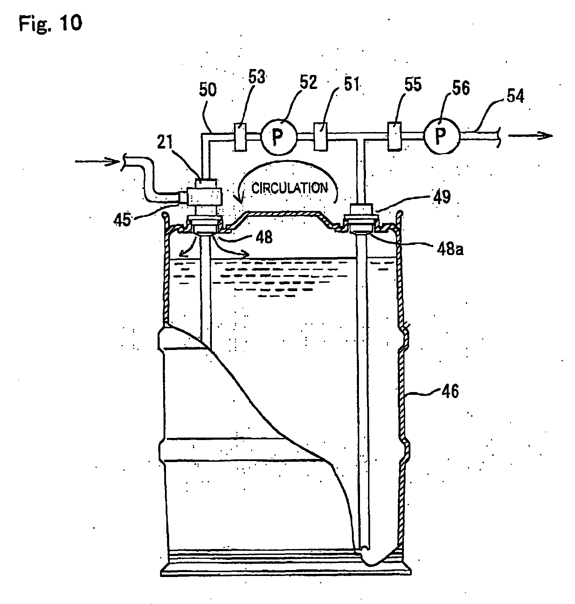

In the connector of the present invention, the plug and the socket each for the liquid passage connection and the plug and the socket each for the gas passage connection are integrated in a compact manner. Due to this, there is no need of connecting the plug with the socket in the side of the gas and no need of connecting the plug with the socket in the side of the liquid too. Only a single connecting operation performed in the side of the liquid makes it possible to deliver the liquid. Consequently, it is possible to reduce labor in half. This makes the connector of the present invention advantageous in cost too. Further, in the conventional system described above, it is also possible to realize the circulation of the liquid of the tank even when the conventional system is still used in the side of the liquid, provided that the connector of the present invention is connected in the side of the gas (Fig. 10 described later). This is an advantageous effect obtained in the present invention.

Particularly, in the inventions described in claims 4 and 5, it is possible to prevent an improper connection between the plug and the socket from occurring, without fail. Further, in the invention described in claim 9, it is possible to obtain an effect in preventing the dust from entering the interior of the plug when a drum is transported. In the present inventions described in claim 10 and 11, it is possible to circulate the liquid of the tank and thereby allowing the liquid to be kept in purity and in concentration. This makes it possible to stabilize a process subsequent to such circulation of the liquid. This is another effect obtained in the present invention.

### BEST MODE FOR CARRYING OUT THE INVENTION

Preferred embodiments for carrying out the present invention will be described with reference to the accompanying drawings. Fig. 1 is a longitudinal sectional view illustrating in construction a connector constructed of both a plug 1 and a socket 2 each constructed according to the present invention. Fig. 2 is a longitudinal sectional view of the plug 1. Fig. 3 is a plan view of the plug 1. Fig. 4 is a longitudinal sectional view of the socket 2.

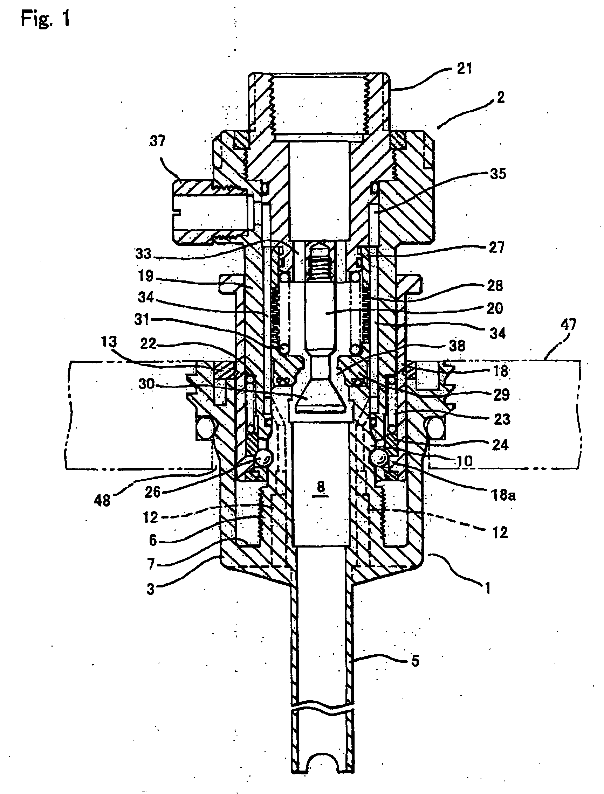

First, with reference to Figs. 1 to 3, the plug 1 will be described in construction. The plug 1 is constructed of a cup-like body 3. A siphon tube 5 is integrally formed with the body 3. Alternatively, the siphon tube 5 may be independently formed and thereafter welded to the body 3. When the connector of the present invention is attached to the tank, the siphon tube 5 extends to the vicinity of the bottom of the tank.

Vertically provided in a central area of a concave portion 7 of the body 3 is a plug tube 6. The plug tube 6 is formed into a cylindrical shape provided with a through hole 8, which hole 8 communicates with the siphon tube 5. Both an annular engagement groove 9 and an annular engagement ridge 10 are formed in an outer peripheral surface in an intermediate portion of the plug tube 6. Formed in an outer peripheral surface of a lower portion of the plug tube 6 is a male screw 11. Fitted into the engagement groove 9 is a locking ball 26 (described later) of the socket 2. One or a plurality of gas passages 12 vertically pass through the plug tube 6 and also pass through a bottom portion of the body 3. An upper end of the gas passage 12 is so opened as to communicate with a side surface of an upper portion of the plug tube 6.

A color ring 13 is fitted in an opening portion provided in an upper surface of the body 3. The color ring 13 is one carrying a color corresponding to a predetermined color for indicating a liquid (or a contained liquid) stored in the tank. Further, the color ring 13 is provided with a plurality of keys 14, which vary their installation positions according to various kinds of the contained liquid. Though the keys 14 fulfill the function of identifying the contained liquid as in the case of coloring the keys 14, it is a primary object of the keys 14 to prevent the socket 2 from being connected to a wrong one of the plugs 1. In other words, the socket 2 is provided with a plurality of key grooves, which are formed in the socket 2 to correspond to the keys 14 thereby allowing only a predetermined socket 2 to connect with the plug 1 to which the color ring 13 carrying a certain color is fitted.

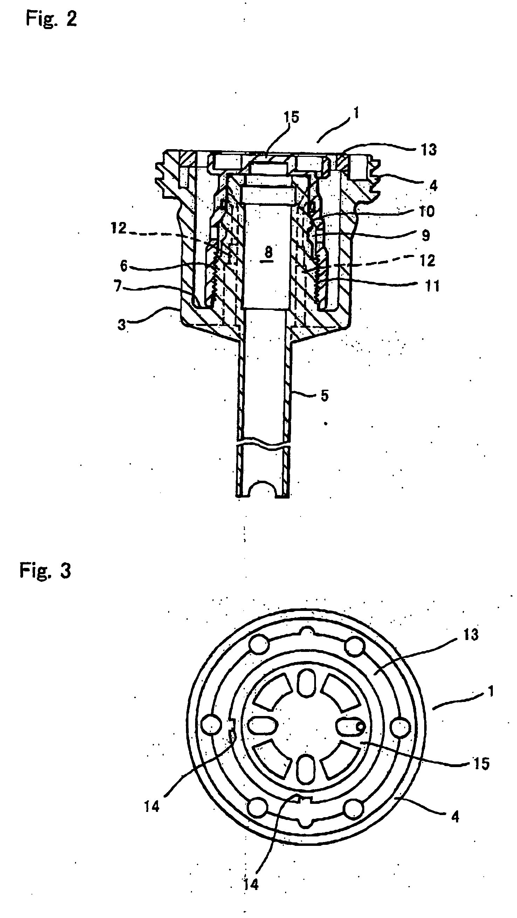

In Fig. 2, there is shown a plug cap which is denoted by the reference numeral 15. The plug cap 15 is one which covers the plug tube 6 to protect the plug tube 6 from damage when the socket 2 is not connected. Formed in an inner peripheral surface of a lower portion of the plug cap 15 is a female screw, which screw is threadably engaged with the male screw portion 11 of the plug tube 6, so that the plug cap 15 is attached to the plug tube 6.

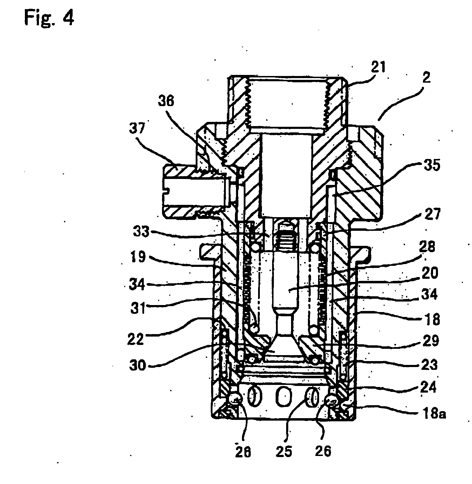

Next, with reference to Figs. 1 and 4, the socket 2 will be described in construction. The socket 2 is provided with: a sleeve 18 provided with a flange in its upper terminal; an inner tube 19 slidably inserted in the sleeve 18; a valve 20 mounted in the inner tube 19; and, a liquid passage connecting piece 21, which is threadably engaged with the inner tube 19.

An outer peripheral surface of a lower portion in the inner tube 19 is reduced in thickness to form a shoulder portion 22. A spring 23 is wound around an upper half portion of such reduced thickness portion. An upper surface of the spring 23 is received by the shoulderportion 22. On the other hand, a lower surface of the spring 23 is received by a spring receiving ring 24, which ring 24 is fitted in a lower portion of the sleeve 18.

A plurality of ball engaging holes 25, each of which divergently opens outwardly and assumes an elongated circular shape, are arranged side by side so as to be spaced apart from each other at appropriate intervals. The ball 26 is fitted in each of the ball engaging holes 25. Arranged in the inner tube 19 is a sleeve element 27. The element 27 has its upper portion fixedly mounted in a lower end portion of the connecting piece 21. In general; the sleeve element 27is provided with a bellows 28 in its intermediate portion thereby allowing such intermediate portion to be extensible and retractable in operation. A lower portion of the sleeve element 27 is formed into a valve seat 29 for receiving a valve head 30 therein, wherein the valve seat 29 flares outwardly. The valve seat 29 assumes a cone-shaped form which flares downward to provide a tapered surface. Seated on such a tapered surface is the valve head 30 used to close the valve. When the valve head 30 is separated from the tapered surface, the valve is opened. Further, the valve seat 29 has its upper surface receive a valve spring 31.

By threadably engaging the connecting piece 21 with the inner tube 19 from above, the connecting piece 21 is mounted in the inner tube 19. The valve 20 is fixedly mounted on a lower bottom surface of the connecting piece 21. In addition, a plurality of liquid communication passages 33 are so formed as to surround such valve's fixedly mounted portion. Through these liquid communication passages 33, the connecting piece 21 has its interior space communicated with the corresponding interior space of the sleeve element 27.

Further, the connecting piece 21 has its bottom surface brought into press-contact with the valve spring 31 thereby allowing a resilient force of the valve spring 31 to be always applied to the valve seat 29. As a result, the valve seat 29 is brought into close contact with the valve head 30 to achieve a liquid-tight engagement with the valve head 30. In this connection, as described later, when the valve seat 29 is pushed upward and is thereby separated from the valve head 30, the separated area of the liquid passage permits the liquid to flow through this separated area of the liquid passage.

One or a plurality of longitudinal grooves are formed in an inner side surface of the inner tube 19, and vertically extend to form a gas passage 34. The gas passage 34 has its lower end opening portion opened up when the valve 20 is closed, so that the opening portion thus opened up is permitted to communicate with the gas passage 12 of the plug 1.

Further, the gas passage 34 has its upper end opening portion opened to an annular gap 35. The gap 35 is formed between an inner peripheral surface of the head portion of the inner tube 19 and an outer peripheral surface of the connecting piece 21. Formed in the head portion of the inner tube 19 is a plug hole 36, which is communicated with the annular gap 35. Threadably engaged with the plug hole 36 is a gas fluid passage connecting piece 37.

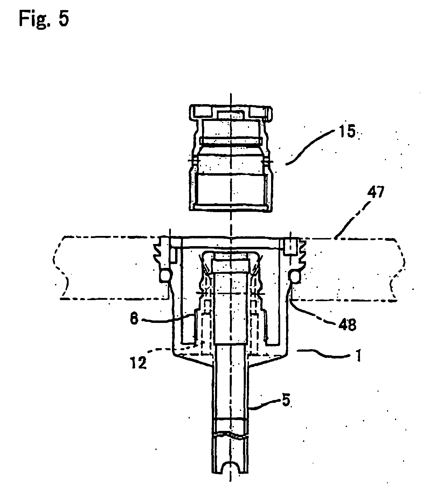

Figs. 5 to 8 are ones which illustrate a method for connecting the plug 1 with the socket 2 each having the above-mentioned construction, wherein: the plug 1 is previously threadably engaged with a mouth stopper portion 48 provided in an upper surface 47 of the tank in a condition in which the plug sleeve 6 has been already covered with the plug cap 15; under such circumstances, first of all, the plug cap 15 is removed therefrom (Fig. 5); and, after that, the socket 2 is fitted in there from above (Fig.. 6).

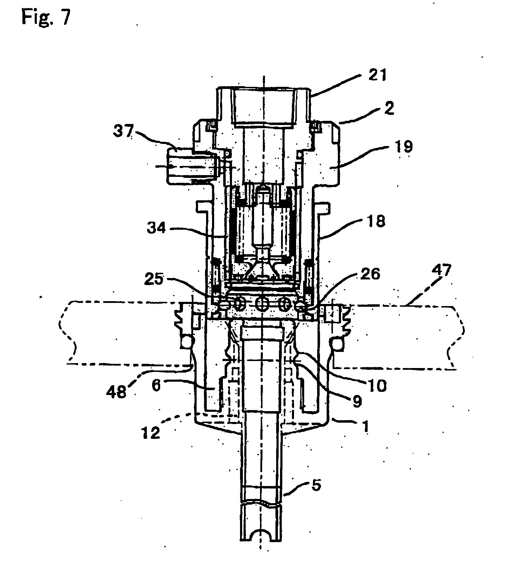

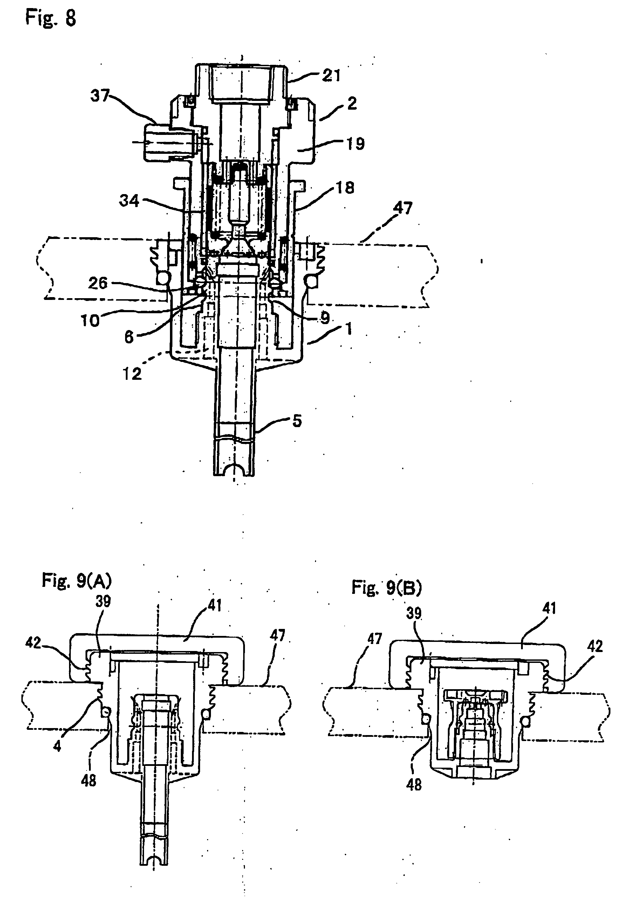

As a result, the plug sleeve 6 is fitted in a lower portion of the inner sleeve 19 (Fig. 7). This causes the ball 26, which has been slightly projected inwardly from the ball engaging hole 25, to hit the engagement ridge 10 of the plug sleeve 6 (Fig. 8). As a result, the ball 26 is temporarily moved outward by the ridge 10. However, when the socket 2 is further pushed in, the ball 26 is forced to ride on and pass through the ridge 10 thereby allowing the ball 26 to be slipped into the engagement groove 9 (Fig. 1). As a result, the socket 2 is locked up by the ball 26, and therefore can not be easily pulled out of the plug 1 thereafter.

In order to unlock the socket 2 thus locked, it is necessary to pull up the sleeve 18 relative to the inner sleeve 19 against the resilient force of the spring 23 by grasping and pulling up the upper end flange of the sleeve 18 relative to the inner sleeve 19 thereby allowing the ball 26 to be pushed back or inward.

In general, the socket 2 is connected with the plug 1 in a condition in which: the connecting piece 21 is previously connected with the liquid passage; and, the other connecting piece 37 is connected with the gas passage.

Upon completion of connection between the socket 2 with the plug 1, the plug sleeve 6 has its head surface abut against the valve seat 29 so that the valve seat 29 is pushed upward against a resilient force exerted by the valve spring 31. When the valve seat 29 is thus pushed upward, the bellows 28 having been disposed on the upper side of the valve seat 29 is compressed thereby allowing the valve seat 29 to be displaced upward and therefore separated from the valve head 30. Due to this, a liquid passage 38 is formed between the valve head 30 and the valve seat 29 (see Fig. 1). Thus, a liquid passage is constructed of: the siphon tube 5; the through hole 8 of the plug sleeve 6; the liquid passage 38; the interior of the sleeve element 27; the liquid communication passages 33; and, the connecting piece 21. This allows the liquid passage thus constructed to deliver the liquid of the tank.

Further, at a time when the socket 2 is connected with the plug 1, the gas passage 12 of the plug sleeve 6, which passage 12 opens into the interior of the tank, communicates with each of the gas passage 34 and the connecting piece 37, wherein the connecting pieced 37 is connected with the gas passage 34. Consequently, an inert gas is supplied to the interior of the tank through these gas passages from the connecting piece 37 thereby allowing the interior the tank to prevent its pressure from decreasing.

In the embodiments described above, as is clear from the drawings, the upper surface of the plug 1 is flushed with the height of the upper surface 47 of the tank without projecting from the upper surface 47 of the tank. In the above construction described in a condition in which the socket 2 is not connected with the plug 1, there is a fear that dust enters the interior of the plug 1 and is deposited therein. In other words, as shown in Fig. 2, at a time when the socket 2 is not connected, the plug sleeve 6 is covered with the plug cap 15. The cap 15 is however used only to protect the plug sleeve 6 from damages, and does seal the concave portion 7 so that the plug cap 15 fails to prevent the dust from entering the interior of the concave portion 7.

An embodiment shown in Fig. 9 is one capable of solving this dust problem. In the embodiment, the male screw portion 4, which is threadably engaged with the mouth stopper portion 48 provided in an upper surface 47 of the tank, is disposed in the intermediate portion of the plug 1. An upper portion of the plug 1 bulges outward to form a bulging portion 39, a diameter of which is larger than an inner diameter of the mouth stopper portion 48, wherein the bulging portion 39 is covered with the dust cap 41.

The dust cap 41 may be one, a type of which is merely fitted to a non-slip rib portion and the like formed inside the dust cap 41. Preferably, the dust cap 41 may be one in which: a male screw 42 is formed in an outer peripheral surface of the bulging portion 39, with which male screw 42 the dust cap 41 is threadably engaged (see Fig. 9). Alternatively or preferably, the dust cap 41 may be another one, in a type of which: a single or few of annular engagement rings are formed in an outer peripheral surface of the bulging portion 39; an engagement ridge is formed in an inner surface of the dust cap 41; and, the engagement ridge is pushed in so as to be brought into press-fit engagement with the engagement rings (a so-called "snap-fit type").

In the case where any one of the above-mentioned types of the dust cap 41 is used to cover the bulging portion 39 therewith, the bulging portion 39 is entirely covered to prevent the dust from entering the interior of the plug 1, without fail. Further, due to the presence of the bulging portion 39, it is possible to prevent the plug 1 frombeing excessively fastened to the mouth stopper portion 48 since the bulging portion 39 abuts against an edge portion of the mouth stopper portion 48 to function as a stopper at a time when the plug 1 is threadaly engaged with the mouth stopper portion 48.

Although the above-mentioned dust protective means is one primarily used in the case where the mouth stopper portion 48 does not project outward from the upper surface 47 of the tank, it is also possible to employ the dust protective means in construction even in the case where the mouth stopper portion 48 projects outward from the upper surface 47 of the tank. Incidentally, in the case where the mouth stopper portion 48 projects outward from the upper surface 47 of the tank, a screw or the like may be formed in the outer peripheral surface of the mouth stopper portion 48 without providing the bulging portion 39, and covered with the dust cap 41.

Further, it is also possible to use the above-mentioned dust protective means in another type of connector in addition to the connector of the present invention shown in Fig. 9 (A). In other words, Fig. 9 (B) shows an example in which the plug in the side of gas assumes another mode. Although not shown in the drawings, it is also possible to use any other mode of the plug in the side of the liquid.

Fig. 10 illustrates in construction an example of the liquid tank 46 according to the present invention, wherein the tank 46 is provided with the above-mentioned connector 45 according to the present invention. This liquid tank 46 is provided with two pieces of such mouth stopper portions 48, 48a in its upper surface 47. Connected to at least one of these portions 48, 48a is the connector 45 of the present invention.

In the example shown in Fig. 10: connected to one 48a of the mouth stopper portions 48, 48a is the liquid passage connecting connector 49 which is conventional in construction; and, connected the other 48 of the mouth stopper portions 48, 48a is the connector 45 of the present invention. In this case, there is provided a circulating liquid passage 50 through which the connecting piece 21 connected to the liquid passage is connected to the connector 49. Incorporated in the circulating liquid passage 50 are: a valve 50; a pump 52; and, a filter 53. Further added to a main liquid passage 54 is a valve 55.

In the case of this liquid tank 46, when a normal delivery operation of the liquid is conducted: the valve 55 of the main liquid passage 54 is opened, and simultaneously the valve 51 is closed to stop the pump 52 so that communication of the liquid to the circulating fluid passage 50 is blocked up. As a result: the connector 45 functions as gas supply means only; and, the liquid stored in the liquid tank 46 is delivered when the pump 56 provided in the side of the main liquid passage 54 is operated.

In the circulating operation: the valve 55 is closed to stop the pump 56; and, the valve 51 provided in the side of the circulating liquid passage 50 is opened to operate the pump 52. Under such circumstances, the liquid having been drawn up through the connector 49 is guided to the circulating liquid passage 50 to flow to the filter 53, so that the liquid is kept in its purity and returned to the liquid tank 46 through the connector 45.

Due to this circulating operation, it is possible to prevent the liquid such as a slurry liquid and like liquid excellent in precipitability from precipitating thereby allowing the liquid: to widely spread; and, to be kept in purity and in concentration, which makes it possible to stabilize any subsequent processes.

The present invention is defined by the appended claims. It is not limited in its scope by its specified embodiments described above.

### BRIEF DESCRIPTION OF THE DRAWINGS

[Fig. 1] is a view illustrating a connected condition of the plug and the socket of the connector according to the present invention.
[Fig. 2] is a longitudinal sectional view of the plug in the connector according to the present invention.
[Fig. 3] is a plan view of the plug in the connector according to the present invention.
[Fig. 4] is a longitudinal sectional view of the socket in the connector according to the present invention.
[Fig. 5] is a view illustrating a connecting process (a first step) of the plug and the socket in the connector according to the present invention.

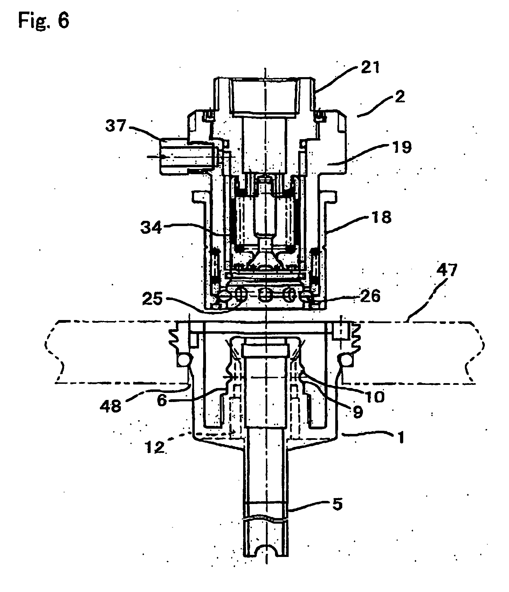

[Fig. 6] is a view illustrating a connecting process (a second step) of the plug and the socket in the connector according to the present invention.
[Fig. 7] is a view illustrating a connecting process (a third step) of the plug and the socket in the connector according to the present invention.
[Fig. 8] is a view illustrating a connecting process (a fourth step) of the plug and the socket in the connector according to the present invention.
[Fig. 9] is a view illustrating in construction an example of the plug provided with the dust-proof cap or dust cap.
[Fig. 10] is a view illustrating in construction an example of the liquid tank according to the present invention.
[Fig. 11] is a view illustrating in arrangement an example of each of the;liquid passage connecting plug and the gas passage connecting plug both connected to the conventional tank.

## Claims

1. A connector to be attached to a liquid tank for delivery of its internal liquid, wherein:
said connector is constructed of a plug (1) fixedly mounted on said tank and a socket (2) connected with said plug (1);
said plug (1) is provided with:
a cup-shaped body (3) having a fitting means for fixing to said tank;
a plug tube (6) which has an engagement means (9, 10) engaged with said socket (2) and is vertically provided in a central area of a concave portion (7) of said cup-shaped body (3) such that there is a gap between said plug tube (6) and said cup shaped body (3);
a liquid passage (8) and a gas passage (12) formed in said cup-shaped body (3) to vertically pass through said plug tube (6):
a siphon tube (5), being a unified portion of said cup-shaped body (3), integrally formed from the bottom of said cup-shaped body (3) to communicate with the liquid passage (8); and wherein
said socket (2) is provided with:
an engagement means (26) engaging with said plug tube (6);
a valve unit;
a liquid passage (38) communicated with said liquid passage (8) of said plug tube (6) and a liquid passage connecting piece (21) communicated with said liquid passage (38) of said socket (2); and
a gas passage (34) communicated with said gas passage (12) of said plug tube (6) and a gas passage connecting piece (37) communicated with said gas passage (34) of said socket (2).

2. A connector to be attached to a liquid tank as set forth in claim 1, wherein said valve unit of said socket (2) is constructed of:
a sleeve element (27) provided with a valve seat (29) in its lower portion;
a valve (20) disposed inside said sleeve element (27); and
a spring (31) for urging said valve seat (29);
wherein said gas passage (34) is so formed as to vertically extend along an outer side of said sleeve element (27) and also to be in communication with said gas passage connecting piece (37); and
when said valve (20) is opened, said liquid passage (8) disposed in the side of said plug (1) is in communication with said liquid passage (38) disposed in the side of said socket (2);
wherein said gas passage (34) disposed in the side of said socket (2) is in communication with said gas passage (12) disposed in the side of said plug (1).

3. The connector to be attached to said liquid tank as set forth in claim 1 or 2, wherein said plug (1) is provided with a plug cap (15) which covers said plug tube (6) at a time when said socket (2) is not connected.

4. The connector to be attached to said liquid tank as set forth in claim 1 or 2, wherein a color ring (13) is fitted in an opening in an upper surface of said cup-shaped body (3) of said plug (1), wherein said color ring (13) is classified in color in accordance with the kinds of said liquid in said tank.

5. The connector to be attached to said liquid tank as set forth in claim 1 or 2, wherein a key (14) is formed in an opening in the upper surface of said cup-shaped body (3) of said plug (1), wherein said key (14) has its installation position varied in accordance with the kind of said liquid stored in said tank.

6. The connector to be attached to said liquid tank as set forth in claim 1 or 2, wherein an upper end of said gas passage (12) having been formed in said plug tube (6) is opened into an upper side surface of said plug tube (6).

7. The connector to be attached to said liquid tank as set forth in claim 2, wherein said socket is constructed of:
a sleeve (18):
an inner tube (19), which is slidably inserted in said sleeve (18) and has its inner peripheral surface formed into said gas passage (34);
said valve unit installed inside said inner tube (19);
said liquid passage connecting piece (21), which is screwed from the upper surface of the inner tube (19) for supporting an upper surface of said valve unit; and
said gas passage connecting piece (37) mounted on an upper portion of said inner tube (19).

8. The connector to be attached to said liquid tank as set forth in claim 7, wherein one or a plurality of gas passages (34) are formed in an outer side of said sleeve element (27), wherein an upper end of each of said gas passages is opened into an annular gap (35) formed between said inner tube and said liquid passage connecting piece (21).

9. The connector to be attached to said liquid tank as set forth in claim 1 or 2, wherein said cup-shaped body (3) of said plug (1) is provided with a male screw portion (4) as a fitting means to be fixed to said tank in its intermediate portion,
wherein said male screw portion (4) is threadably engaged with a mouth stopper portion of an upper surface of said tank, and a bulging portion (39) which bulges out over an edge portion of said mouth stopper portion (48) is provided in an upper portion of said plug (1) and said bulging portion (39) is covered with a dust protective cap (41).

10. A liquid tank and a connector attached thereto, comprising:
two pieces of mouth stopper portions (48) in an upper surface of said liquid tank,
wherein at least one of said mouth stopper portions (48) is connected with said connector, and
wherein said connector is the connector of any one of claim 1 or claim 2 or claim 7, thereby providing a circulation passage (50) for connecting said two connectors.

11. The liquid tank as set forth in claim 10, wherein a valve (51), a pump (52) and a filter (53) are installed in said circulation liquid passage.

## Patentansprüche

1. Verbindungseinrichtung zum Befestigen an einem Flüssigkeitsbehälter zum Fördern der darin enthaltenen Flüssigkeit, wobei:
- die Verbindungseinrichtung aus einem Stopfen **(1),** der an dem Behälter fest angebracht ist, und einer Buchse **(2),** die mit dem Stopfen **(1)** verbunden ist, hergestellt ist;
- der Stopfen **(1)** Folgendes aufweist:
- einen topfförmigen Körper **(3)** mit einer Einpasseinrichtung zum Befestigen an dem Behälter;
- ein Stopfenrohr **(6),** das eine Eingriffseinrichtung **(9, 10)** aufweist, die mit der Buchse **(2)** in Eingriff steht und in einem mittigen Bereich eines konkaven Abschnitts **(7)** des topfförmigen Körpers **(3)** vertikal vorgesehen ist, derart, dass ein Spalt zwischen dem Stopfenrohr **(6)** und dem topfförmigen Körper **(3)** vorhanden ist;
- einen Flüssigkeitskanal **(8)** und einen Gaskanal **(12),** die in dem topfförmigen Körper **(3)** ausgebildet und vertikal durch das Stopfenrohr **(6)** hindurchgeführt sind;
- ein Siphonrohr **(5),** das einen einheitlichen Teil des topfförmigen Körpers **(3)** bildet und von dem Boden des topfförmigen Körpers **(3)** aus einstückig ausgebildet ist, um mit dem Flüssigkeitskanal **(8)** verbunden zu sein; und wobei
- die Buchse **(2)** Folgendes aufweist:
- eine Eingriffseinrichtung **(26),** die mit dem Stopfenrohr **(6)** in Eingriff steht;
- eine Ventileinheit;
- einen Flüssigkeitskanal (38), der mit dem Flüssigkeitskanal **(8)** des Stopfenrohrs **(6)** verbunden ist und ein Anschlussstück **(21)** des Flüssigkeitskanals, das mit dem Flüssigkeitskanal **(38)** der Buchse **(2)** verbunden ist; und
- einen Gaskanal **(34),** der mit dem Gaskanal **(12)** des Stopfenrohrs **(6)** verbunden ist, und ein Anschlussstück **(37)** des Gaskanals, das mit dem Gaskanal **(34)** der Buchse **(2)** verbunden ist.

2. Verbindungseinrichtung zum Befestigen an einem Flüssigkeitsbehälter nach Anspruch 1, wobei die Ventiteinheit der Buchse **(2)** aus Folgendem hergestellt ist:
- ein Hülsenelement **(27),** das in dem unterem Abschnitt einen Ventilsitz **(29)** aufweist;
- ein Ventil **(20),** das in dem Hülsenelement **(27)** angeordnet ist; und
- eine Feder **(31)** zum Antreiben des Ventilsitzes **(29),**
- wobei der Gaskanal **(34)** so ausgebildet ist, dass er sich vertikal entlang einer äußeren Seite des Hülsenelements **(27)** erstreckt und mit dem Anschlussstück **(37)** des Gaskanals in Verbindung steht, und
- wenn das Ventil **(20)** geöffnet ist, der Flüssigkeitskanal **(8),** der in der Seite des Stopfen s **(1)** angeordnet ist, mit dem Flüssigkeitskanal **(38)** in Verbindung steht, der in der Seite der Buchse **(2)** angeordnet ist,
- wobei der Gaskanal **(34),** der in der Seite der Buchse **(2)** angeordnet ist, mit dem Gaskanal **(12)** in Verbindung steht, der in der Seite des Stopfens **(1)** angeordnet ist.

3. Verbindungseinrichtung zum Befestigen an einem Flüssigkeitsbehälter nach Anspruch 1 oder 2, wobei der Stopfen **(1)** eine Stopfenkappe **(15)** aufweist, die dann, wenn die Buchse **(2)** nicht angeschlossen ist, das Stopfenrohr **(6)** bedeckt

4. Verbindungseinrichtung zum Befestigen an einem Flüssigkeitsbehälter nach Anspruch 1 oder 2, wobei ein Farbring **(13)** in einer Öffnung in einer oberen Fläche des topfförmigen Körpers **(3)** des Stopfens **(1)** eingepasst ist, wobei der Farbring **(13)** entsprechend den Arten der Flüssigkeit in dem Behälter nach Farbe klassifiziert ist

5. Verbindungseinrichtung zum Befestigen an einem Flüssigkeitsbehälter nach Anspruch 1 oder 2, wobei ein Schlüssel **(14)** in einer Öffnung in der oberen Oberfläche des topfförmigen Körpers **(3)** des Stopfens **(1)** ausgebildet ist, wobei die Einbauposition des Schlüssels **(14)** entsprechend der Art der Flüssigkeit, die in dem Behälter gespeichert ist, geändert ist.

6. Verbindungseinrichtung zum Befestigen an einem Flüssigkeitsbehälter nach Anspruch 1 oder 2, wobei ein oberes Ende des Gaskanals **(12),** das in dem Stopfenrohr **(6)** gebildet wurde, in eine obere Seitenoberfläche des Stopfenrohrs **(6)** mündet

7. Verbindungseinrichtung zum Befestigen an einem Flussigkeitsbehälter nach Anspruch 2, wobei die Buchse aus
- einer Hülse **(18),**
- einem inneren Rohr **(19),** das in die Hülse **(18)** gleitend eingesetzt ist und dessen innere Umfangsfläche in den Gaskanal **(34)** ausgebildet ist,
- der Ventileinheit, die in dem inneren Rohr **(19)** eingebaut ist,
- dem Anschlussstück **(21)** des Flüssigkeitskanals, das von der oberen Fläche des inneren Rohres **(19)** geschraubt ist, um eine obere Oberfläche der Ventileinheit zu stützen, und
- dem Anschlussstück **(37)** des Gaskanals, das an einem oberen Abschnitt des inneren Rohres **(19)** angebracht ist,
hergestellt ist

8. Verbindungseinrichtung zum Befestigen an einem Flüssigkeitsbehälter nach Anspruch 7, wobei ein Gaskanal oder eine Anzahl von Gaskanälen **(34)** in einer äußeren Seite des Hülsenelementes **(27)** ausgebildet ist, wobei ein oberes Ende jedes der Gaskanäle in einen ringförmigen Spalt **(35)** mündet, der zwischen dem inneren Rohr und dem Anschlussstück **(21)** des Flüssigkeitskanals ausgebildet ist.

9. Verbindungseinrichtung zum Befestigen an einem Flüssigkeitsbehälter nach Anspruch 1 oder 2, wobei der topfförmige Körper **(3)** des Stopfens **(1)** einen Außengewindeabschnitt **(4)** als Passeinrichtung aufweist, der an dem Behälter in dessen zwischenliegendem Abschnitt zu befestigen ist,
wobei der Außengewindeabschnitt **(4)** in schraubbarer Verbindung mit einem Öffnungsverschlussabschnitt einer oberen Oberfläche des Behälters steht, und ein wulstiger Abschnitt **(39),** der über einen Randabschnitt des Öffnungsverschlussabschnitts **(48)** hervorsteht, in einem oberen Abschnitt des Stopfens **(1)** vorgesehen ist und der wulstiger Abschnitt **(39)** mit einer Staubschutzkappe **(41)** bedeckt ist

10. Flüssigkeitsbehälter und damit verbundene Verbindungseinrichtung, umfassend:
zwei Stücke der Öffnungsverschlussabschnitte **(48)** in einer oberen Oberfläche des Flüssigkeitsbehälters,
wobei mindestens einer der Öffnungsverschlussabschnitte **(48)** mit der Verbindungseinrichtung verbunden ist, und
wobei die Verbindungseinrichtung die des Anspruchs 1 oder des Anspruchs 2 oder des Anspruchs 7 ist und hierdurch einen Umlaufkanal (50) zum Verbinden zweier Verbindungseinrichtungen herstellt

11. Flüssigkeitsbehälter nach Anspruch 10, wobei ein Ventil **(51),** eine Pumpe **(52)** und ein Filter **(53)** in dem Flüssigkeitsumlaufkanal eingebaut sind.

## Revendications

1. Connecteur pour être fixé à un réservoir de liquide pour la livraison de son liquide interne, dans lequel
- le connecteur est composé d'un bouchon (1) monté de manière fixe au réservoir et d'une douille (2) connectée au bouchon (1);
- le bouchon (1) comprend:
- un corps en forme de tasse (3) ayant un dispositif d'emmanchement pour la fixation au réservoir;
- un tube bouchon (6) ayant un dispositif d'engrènement (9, 10) engrené avec la douille (2) et prévu verticalement dans une zone centrale d'une partie concave (7) du corps en forme de tasse (3), de sorte qu'il y a un espace entre le tube bouchon (6) et le corps en forme de tasse (3);
- un canal de liquide (8) et un canal de gaz (12) formés dans le corps en forme de tasse (3) pour passer verticalement à travers le tube bouchon (6)
- un tube siphon (5), étant une partie unitaire du corps en forme de tasse (3), formé d'une seule pièce du fond du corps en forme de tasse (3) pour communiquer avec le canal de liquide (8); et dans lequel
- la douille (2) est fournie avec:
- un dispositif d'engrènement (26) s'engrenant avec le tube bouchon (6);
- une unité de soupape;
- un canal de liquide (38) communiquant avec le canal de liquide (8) du tube bouchon (6), et une pièce de raccordement du canal de liquide (21) communiquant avec le canal de liquide (38) de la douille (2); et
- un canal de gaz (34) communiquant avec le canal de gaz (12) du tube bouchon (6), et une pièce de raccordement du canal de gaz (37) communiquant avec le canal de gaz (34) de la douille (2).

2. Connecteur pour être fixé à un réservoir de liquide selon la revendication 1, dans lequel l'unité de soupape de la douille (2) est composée
- d'un élément manchon (27) fourni avec un siège de soupape (29) dans sa partie inférieure,
- d'une soupape (20) disposée dans l'élément manchon (27), et
- d'un ressort (31) pour pousser le siège de soupape (29);
- dans lequel le canal de gaz (34) est formé pour s'étendre verticalement le long d'un côté extérieur de l'élément manchon (27) et aussi pour être en communication avec la pièce de raccordement du canal de gaz (37); et
- quand la soupape (20) est ouverte, le canal de liquide (8) disposé dans le côté du bouchon (1) est en communication avec le canal de liquide (38) disposé dans le côté de la douille (2);
- dans lequel le canal de gaz (34) disposé dans le côté de la douille (2) est en communication avec le canal de gaz (12) disposé dans le côté du bouchon (1)

3. Connecteur pour être fixé au réservoir de liquide selon la revendication 1 ou 2, dans lequel le bouchon (1) est fourni avec un capuchon de bouchon (15) qui recouvre le tube bouchon (6) quand la douille (2) n'est pas connectée.

4. Connecteur pour être fixé au réservoir de liquide selon la revendication 1 ou 2, dans lequel un anneau de couleur (13) est emmanché dans une ouverture dans une surface supérieure du corps en forme de tasse (3) du bouchon (1), dans lequel l'anneau de couleur (13) est classifié en couleur selon les types de liquide dans le réservoir

5. Connecteur pour être fixé au réservoir de liquide selon la revendication 1 ou 2, dans lequel un clé (14) est formé dans une ouverture dans la surface supérieure du corps en forme de tasse (3) du bouchon (1), dans lequel la position de montage du clé (14) est variée en conformité avec le type du liquide entreposé dans le réservoir.

6. Connecteur pour être fixé au réservoir de liquide selon la revendication 1 ou 2, dans lequel une extrémité supérieure du canal de gaz (12), ayant été formée dans le tube bouchon (6), débouche dans une surface latérale supérieure du tube bouchon (6).

7. Connecteur pour être fixé au réservoir de liquide selon la revendication 2, dans lequel la douille est composée
- d'un manchon (18),
- d'un tube intérieur (19), qui est inséré de manière coulissante dans le manchon (18) et a sa surface périphérique intérieure formée dans le canal de gaz (34),
- de l'unité de soupape installée à l'intérieur du tube intérieur (19),
- de la pièce de raccordement du canal de liquide (21), qui est vissée de la surface supérieure du tube intérieur (19) pour supporter une surface supérieure de l'unité de soupape et
- de la pièce de raccordement du canal de gaz (37) montée sur une partie supérieure du tube intérieur (19).

8. Connecteur pour être fixé au réservoir de liquide selon la revendication 7, dans lequel un canal ou une pluralité de canaux de gaz (34) est formé ou formée dans un côté extérieur de l'élément manchon (27), dans lequel une extrémité supérieure de chacun des canaux de gaz débouche dans un espace annulaire (35) formé entre le tube intérieur et la pièce de raccordement du canal de liquide (21)

9. Connecteur pour être fixé au réservoir de liquide selon la revendication 1 ou 2, dans lequel le corps en forme de tasse (3) du bouchon (1) est fourni avec une partie à filetage mâle (4) comme dispositif d'emmanchement pour la fixation au réservoir dans sa position intermédiaire,
dans lequel la partie à filetage mâle (4) est en engrènement par filetage avec une partie bouchon de bouche d'une surface supérieure du réservoir, et une partie bombée (39), qui ressortit par rapport à une partie de bord de la partie bouchon de bouche (48), est fournie dans une partie supérieure du bouchon (1) et la partie bombée (39) est couverte avec un capuchon de protection anti-poussière (41).

10. Réservoir de liquide et connecteur fixé au réservoir, comprenant:
- deux pièces de partie bouchon de bouche (48) dans une surface supérieure du réservoir de liquide
- dans lequel au moins une des parties bouchon de bouche (48) est connectée avec le connecteur, et
- dans lequel le connecteur est le connecteur de l'une quelconque des revendications 1, 2 et 7, ainsi fournissant un canal de circulation (50) pour raccorder les deux connecteurs

11. Réservoir de liquide selon la revendication 10, dans lequel une soupape (51), une pompe (52) et un filtre (53) sont montés dans le canal de circulation de liquide
